(19)

Europäisches Patentamt

European Patent Office

Office européen des brevets

(11) **EP 4 389 971 A1**

(12) **EUROPEAN PATENT APPLICATION**

(43) Date of publication:
**26.06.2024 Bulletin 2024/26**

(21) Application number: **22216244.8**

(22) Date of filing: **22.12.2022**

(51) International Patent Classification (IPC):
***D21H 19/40*** *(2006.01)*   ***B65D 63/10*** *(2006.01)*
***D21H 19/44*** *(2006.01)*   ***D21H 19/82*** *(2006.01)*
***D21H 19/84*** *(2006.01)*   ***D21H 27/00*** *(2006.01)*

(52) Cooperative Patent Classification (CPC):
**D21H 19/822; B65D 63/1009; C09J 7/201;**
**D21H 19/40; D21H 19/44; D21H 19/826;**
**D21H 19/84; D21H 27/001**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Neenah Gessner GmbH**
**83052 Bruckmühl (DE)**

(72) Inventor: **RAIDT, Michael**
**83052 Bruckmühl (DE)**

(74) Representative: **Plasseraud IP**
**66, rue de la Chaussée d'Antin**
**75440 Paris Cedex 09 (FR)**

(54) **REPULPABLE, PAPER-BASED BACKING LAYER**

(57) The present invention relates to a backing layer comprising a barrier coating layer comprising an inorganic filler and a polymer having a glass transition temperature of -35°C to +15 °C.

## Description

### Technical Field

The present disclosure concerns a paper-based backing layer. The backing layer comprises several layers, inter alia a paper layer, and a barrier coating layer, which may comprise polymers and inorganic fillers. The backing layer may be used in tapes, labels and related products.

### Background

Paper-based backing layers form the backbone of various tapes (closing tapes, opening tapes (e.g. tear tapes) and reinforcing tapes), labels and related products, on which prints may be applied. The paper-based backing layers often include several coatings applied in layers on a paper carrier.

As the tapes, labels and related products are attached to cardboard boxes, letters, envelopes and the like, the entire materials are subjected to recycling processes. In recycling processes the materials are fed into a pulper and treated mechanically in water having neutral to alkaline pH to achieve disintegration of paper to cellulose fibres. This is followed by several purification steps such as sieving and flotation, finally affording a slurry comprising cellulose fibres. The slurry is expected to satisfy the requirements for feeding into a paper-making machine.

During the processing of cellulose slurries derived from recycled paper on paper-making machines, interruptions and down-times of machinery occur frequently. This reduces the efficiency of the recycling process.

The interruptions are caused by so-called "stickies", which are agglomerations or even lumps of sticky polymers, which originate from coatings applied on paper carriers and could not be removed from cellulose fibers during purification of the cellulose slurry. Stickies are noticeable as fatty spots on recycled paper sheets. They are responsible for sheets of recycled paper sticking together. Stickies attach to rollers and thereby affect the quality of a paper web during production, thereby reducing efficiency of production and increasing production costs.

A certain proportion of agglomerations and lumps of sticky polymers is separated from the slurry during purification by way of sieves, screens and filters. However, purification is incomplete. In addition, the removed agglomerations and lumps of sticky polymers are not recyclable. They end up in the waste stream to be landfilled or burned. This shall be avoided from the point of view of environmental protection.

Thus, even comprising a paper-based backing layer, conventional tapes, labels and related products can be recycled only to an unsatisfactory extent.

Recyclability may be measured as per the "Voluntary Standard For Repulping and Recycling Corrugated Fiberboard Treated to Improve Its Performance in the Presence of Water and Water Vapor" (revised Aug. 16, 2013) published by the Fibre Box Association (FBA), USA, which comprises guidelines for measuring fibre recyclability and the proportion of stickies contents of a recycled product. The Standard sets a requirement of at least 85% of fiber recyclability, based on bone dry fiber charged to a pulper; and a sticky proportion of 15 or lower.

Conventional paper-based backing layers presents values of around % of fiber recyclability and a sticky proportion of around and higher than 100. From the view point of production efficiency and environmental pollution, these values are disadvantageous.

Therefore there is a need in the art to provide a paper-based backing layer that presents improved recyclability and improved production efficiency. Such paper-based backing layer is expected to exhibit a fiber recyclability of at least 85% and a sticky proportion of lower than 15, preferably lower than 5, as determined by aforesaid Voluntary Standard.

### Summary

The present disclosure concerns a paper-based backing layer.

The present disclosure provides a backing layer comprising

- a first layer, which is a paper layer,
- a second layer, which is a barrier coating layer, applied on one or both sides of the first layer,

characterized in that the barrier coating layer comprises

- 30 to 70 % by weight of an inorganic filler,
- 70 to 30 % by weight of a polymer having a glass transition temperature (Tg) of -35 to +15 °C.

The present disclosure also provides an adhesive tape comprising the above backing layer.

The backing layer of the present disclosure passes the stringent criteria of the "Voluntary Standard For Repulping and Recycling Corrugated Fiberboard Treated to Improve Its Performance in the Presence of Water and Water Vapor" (revised Aug. 16, 2013) published by the Fibre Box Association (FBA), USA. The backing layer presents advantageous fibre recyclability and stickies count having a very high extent of repulpability. The backing layer shows improved production efficiency and reduced ecological footprint. As such it is advantageous and instrumental in improving production efficiency and ecological footprint of conventional tapes, labels and related products.

## Description of Figures

Figure 1 depicting a backing layer suitable for a single-sided adhesive tape.

Figure 2 depicting a backing layer suitable for a double-sided adhesive tape.

## Detailed Description

Definitions

Further aspects, features and advantages of the exemplary embodiments will become apparent from the detailed description which follows.

The patents, published applications and scientific literature referred to herein establish the knowledge of those with skill in the art and are hereby incorporated by reference in their entireties to the same extent as if each was specifically and individually indicated to be incorporated by reference.

As used herein, whether in a transitional phrase or in the body of a claim, the terms "comprise(s)" and "comprising" are to be interpreted as having an open-ended meaning. That is, the terms are to be interpreted synonymously with the phrases "having at least" or "including at least". When used in the context of a method, the term "comprising" means that the method includes at least the recited steps, but may include additional steps. When used in the context of a composition, the term "comprising" means that the composition includes at least the recited features or components, but may also include additional features or components.

The terms "consists essentially of" or "consisting essentially of" have a partially closed meaning, that is, they do not permit inclusion of steps or features or components which would substantially change the essential characteristics of a method or composition; for example, steps or features or components which would significantly interfere with the desired properties of the compounds or compositions described herein, i.e., the method or composition is limited to the specified steps or materials and those which do not materially affect the basic and novel characteristics of the method or composition. The terms "consists of" and "consists" are closed terminology and allow only for the inclusion of the recited steps or features or components.

As used herein, the singular forms "a," "an" and "the" specifically also encompass the plural forms of the terms to which they refer, unless the content clearly dictates otherwise.

The term "dissolved" or "substantially dissolved" is used herein to mean the solubilization of a solid in a solution. It can be considered that a solid is "dissolved" or "substantially dissolved" in a solution when the resulting solution is clear or substantially clear.

As used herein, the recitation of a numerical range for a variable is intended to convey that the variable can be equal to any values within that range. Thus, for a variable which is inherently discrete, the variable can be equal to any integer value of the numerical range, including the end-points of the range. Similarly, for a variable which is inherently continuous, the variable can be equal to any real value of the numerical range, including the end-points of the range. As an example, a variable which is described as having values between 0 and 2, can be 0, 1 or 2 for variables which are inherently discrete, and can be 0.0, 0.1, 0.01, 0.001, or any other real value for variables which are inherently continuous.

In the specification and claims, the singular forms include plural referents unless the context clearly dictates otherwise.

Technical and scientific terms used herein have the meaning commonly understood by one of skill in the art to which the present description pertains, unless otherwise defined.

Description

The present disclosure provides a backing layer. This is a stack of layers which serves as support, on which layers may be applied so that a resulting multilayer stack has certain properties and fulfils certain functions, respectively, which make the multilayer stack suitable for use in diverse fields.

The backing layer is paper-based.

The backing layer of the present disclosure comprises

- a first layer, which is a paper layer,
- a second layer, which is a barrier coating layer, applied on one or both sides of the first layer,

characterized in that the barrier coating layer comprises

- 30 to 70 % by weight of an inorganic filler,
- 70 to 30 % by weight of a polymer having a glass transition temperature (Tg) of -35 to +15 °C.

The paper layer serves as a carrier layer or support layer. It may be referred to as paper carrier in the prior art.

The barrier coating layer may be applied on both sides of the paper layer or only on one side of the paper layer. Preferably, it is applied on both sides of the paper layer. The barrier coating layer may be directly applied on the first layer, which is a paper layer. It is preferably applied directly on both sides of the paper layer.

The backing layer may comprise a prime coating layer applied on the second layer (i.e. the barrier coating layer). The prime coating layer functions as an intermediate layer in between the barrier coating layer and another layer, ensuring stability of a stack of layers.

In an example, the prime coating layer may be present only on one side of the backing layer. The prime coating layer may be applied directly on the barrier coating layer only on one side of the backing layer. A release coating layer may be applied on the second layer (i.e. the barrier coating layer) on the side of the backing layer opposite the prime coating layer. The release coating layer may be applied directly on said second layer. Thus the release coating layer is present only on one side of the backing layer. The release coating layer ensures that the backing layer can be rolled up during production and desired lengths of backing layer be unrolled before use.

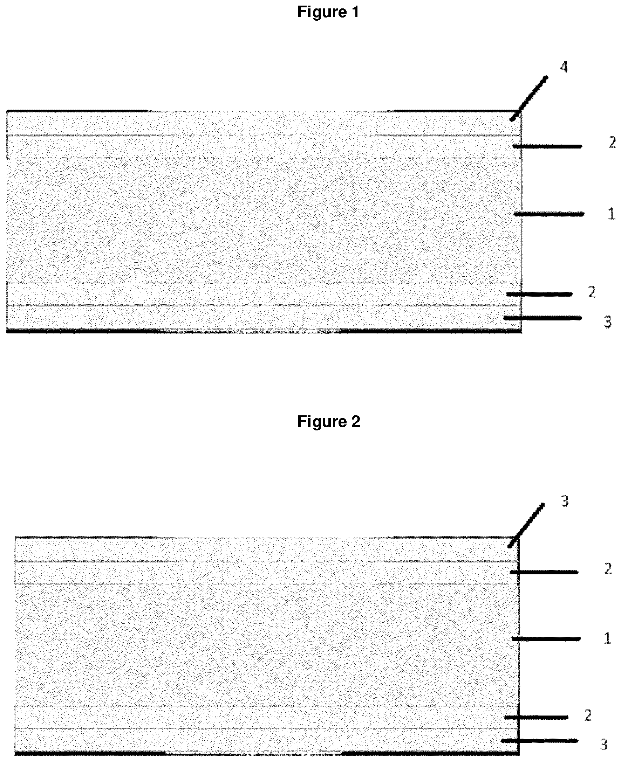

Figure 1 depicts a backing layer comprising a paper layer (1), a barrier coating layer (2), a prime coating layer (3) and a release coating layer (4).

In an example, a backing layer may comprise a first layer which is a paper layer; a second layer, which is a barrier coating layer applied directly on both sides of the paper layer; a prime coating layer applied directly on the second layer only on one side of the backing layer; and a release coating layer directly applied on the second layer on the side of the backing layer opposite the prime coating layer. In an example, a backing layer may consist of the aforesaid layer sequence and stack.

The prime coating layer may receive a layer such as an adhesive layer. As the adhesive is applied only on one side, a single-sided adhesive tape may be formed.

Figure 2 depicts a backing layer comprising a paper layer (1), two barrier coating layers (2), and two prime coating layers (3).

In an example, the prime coating layer may be present on both sides of the second layer (i.e. the barrier coating layer). The prime coating layer may be applied directly on the barrier coating layer on both sides of the backing layer. Thus, in an example a backing layer may comprise a first layer which is a paper layer; a second layer, which is a barrier coating layer applied directly on both sides of the paper layer; and a prime coating layer applied directly on the second layer on both sides of the backing layer. In an example, a backing layer may consist of the aforesaid layer sequence and stack.

The two prime coating layers may receive a layer such as an adhesive layer. As the adhesive is applied on both prime coating layers, a double-sided adhesive tape may be formed.

The second layer (i.e. the barrier coating layer) comprises 30 to 70 % by weight of an inorganic filler. The barrier coating layer may comprise preferably 35 to 65 wt.%, more preferably 40 to 60 wt.%, and most preferably 45 to 55 wt.% of an inorganic filler.

The inorganic filler may be a hydrophilic filler. The inorganic filler may be selected from the group consisting of kaolinite, calcined kaolinite, calcium carbonate, precipitated calcium carbonate (PCC), ground calcium carbonate (GCC), talc, mica, clay, silica, precipitated silica, pyrogenic silica, titanium dioxide or their mixtures. The barrier coating layer may preferably comprise kaolinite. The hydrophilic fillers are typically not coated or chemically treated in any way/

The presence of the inorganic filler in the barrier coating layer in aforesaid proportions has the advantage that repulpability and sticky count of the backing layer is significantly improved. Without wanting to be bound by theory, it is assumed that the presence of the inorganic filler, in particular a hydrophilic filler, in significant amounts in the barrier coating layer allows for the penetration of water into the layer during recycling procedures and allows for suspending the polymer components of the layer in water.

The second layer (i.e. the barrier coating layer) comprises 70 to 30 % by weight of a polymer having a glass transition temperature (Tg) of -35 to +15 °C. The weight percentages are calculated on the basis of all components of the barrier coating layer in dry, applied state. The barrier coating layer may comprise 65 to 35 wt.%, preferably 60 to 40 wt.%, more preferably 55 to 45 wt.% of a polymer having a glass transition temperature (Tg) of -35 to + 15 °C.

The polymer may have a glass transition temperature (Tg) of -30 to +10 °C, preferably -25 to +5 °C. The glass transition temperature is measured according to DIN ISO 53765 (1994-03). Polymers having a Tg of below zero degrees Celsius and in particular well below zero degrees Celsius are considered as hard polymers which tend to be sticky. Polymers having a Tg above zero degrees Celsius tend to be non-sticky. The instant disclosure provides backing layers comprising polymers having a Tg of below zero degrees Celsius, which are sticky, but still lead to a sticky count below 5, so that they conform to the Voluntary Standard described above as tested by the Western Michigan University.

The polymer may be selected from the group consisting of carboxylated styrene-butadiene rubber, styrene butadiene-rubber, acrylate-based polymers, acrylo-nitrile butadiene rubber, natural rubber, polyvinylacetate or mixtures thereof, with carboxylated styrene-butadiene rubber being preferred.

The barrier coating layer may comprise carboxylated styrene-butadiene rubber having a Tg of -27 to -23°C at a proportion of 65 to 35 wt.%, preferably 60 to 40 wt.%, more preferably 55 to 45 wt.%.

The barrier coating layer may comprise carboxylated styrene-butadiene rubber with a Tg of +3 to +7 °C at a proportion of 65 to 35 wt.%, preferably 60 to 40 wt.%, more preferably 55 to 45 wt.%.

The barrier coating layer may comprise an anti-foaming agent. The anti-foaming may be contained in 0 to 0.05 wt.%. If contained, it may be contained in up to 0.05 wt.% or 0.01 to 0.03 wt.%. The proportions are calculated on the basis of the overall weight of the barrier coating layer, so that inorganic filler, polymer and anti-foaming agent add up to 100 wt.%. The anti-foaming agent may be selected from the group consisting of a mineral oil-based, vegetable oil-based, and siloxane-oil based anti-foaming agent.

In an example, the barrier coating layer comprises the inorganic filler in weight percentages given above, the polymer in weight percentages given above and the anti-foaming agent in percentages given above. In an example, the barrier coating layer may consist of aforesaid components in the given weight percentages.

The barrier coating layer may essentially consist of said components in the given percentages, whereby it is not excluded that impurities are present due to processing parameters or starting material specifications and that customary additives are present in small weight percentages not materially altering the technical properties, the intended effect described in the present disclosure and the usability of the barrier coating layer. To achieve the intended effect, the inorganic filler and the polymer are comprised in the barrier coating layer at a combined percentage of at least 93%, preferably at least 95%, even at least 97%.

The barrier coating layer may comprise customary additives such as crosslinkers, dispersants, wetting agents, thickeners, hydrophobing agents or hydrophilizing agents in customary amounts such as minimum amounts of 0.05, 0.1 or 0.25 wt.% up to 3, 4 or 5 wt.%. If additives are present, the inorganic filler and the polymer are comprised in the barrier coating layer at a combined percentage of at least 93%, preferably at least 95%, even at least 97%.

The barrier coating layer is applied at a coat weight of 1 to 10 gsm, preferably 3 to 7 gsm.

The first layer of the backing layer of the present disclosure is a paper layer.

The paper layer may have an extensibility in machine direction (MD) of 3 to 10 %, preferably 5 to 8 %, wherein extensibility is measured as per DIN EN ISO 1924-2 (2008).

The paper may have an extensibility in cross direction (CD), which is orthogonal to machine direction (MD) of 5 to 15 %, preferably 8 to 12 %, wherein extensibility is measured as per DIN EN ISO 1924-2 (2008). The extensibility values, in particular in machine direction, allow for use of the backing layer in adhesive tapes and related applications. The extensibility allows for the backing layer to be used in various forms of tapes used for wrapping or fixing. The extensibility is maintained even after application of layers described herein. Extensibility of the final product may even surpass aforesaid extensibility due to the application of the layers.

In addition, the paper used as paper layer may have a high density and be highly sized, so that components of the barrier coating layer do not or to a very limited extent impregnate the paper layer and repulpability is maintained.

The paper layer may have a porosity measured as Air Resistance (Gurley) of 5 to 25, preferably 10 to 20 Gurleys, measured as per ISO 5636-5 (2003).

The paper layer may have water absorption (Cobb60) values of 20 to 40 gsm, preferably 25 to 35 gsm, measured according to the Cobb 60 test method ISO 535 (2014).

The porosity and water absorption values ensure that the components of the barrier coating layer do not or only to a very limited extent impregnate the paper layer, while the paper layer remains repulpable. The paper layer may consist of paper satisfying aforesaid requirements and carry no other coating or have been subjected to any treatment such as coatings except for treatments or coatings to arrive at aforesaid technical properties.

The paper used for the paper layer may be selected from the group consisting of bleached or brown Kraft paper, bleached or brown sack Kraft paper, semi-extensible Kraft paper, semi-extensible sack Kraft paper, preferably semi-extensible sack Kraft paper.

Said papers satisfy the air resistance (Gurley) and water absorption (Cobb60) requirements given above, so that the components of the barrier coating layer do not or only to a very limited extent impregnate the paper layer, while the paper layer remains repulpable.

These papers are not subjected to any additional treatments such as additional coatings. The papers are used as purchased.

The paper used for the paper layer may have a basis weight of 40 to 100 gsm, or 40 to 80 gsm, preferably 50 to 70 gsm.

The backing layer may comprise a prime coating layer, which may be present on one or both sides of the second layer (i.e. the barrier coating layer) as described above. The prime coating layer may comprise polymers or polymer compositions selected from the group consisting of styrene butadiene-rubber, acrylate-based polymers, acrylo-nitrile butadiene rubber, polyvinyl acetate, natural rubber, pre-vulcanised natural rubber, butyl-acrylate; natural rubber grafted with methacrylate, carboxylated styrene butadiene rubber, and polyurethane.

The prime coating layer may comprise one polymer or a mixture of two or more polymers. The prime coating layer The prime coating layer may be a composition comprising pre-vulcanised natural rubber and, butyl-acrylate. The prime coating layer may be a composition comprising methacrylate-grafted natural rubber and carboxylated styrene-butadiene-rubber. Said composition may comprise methacrylate-grafted natural rubber and carboxylated styrene-butadiene-rubber blended at a proportion of 80:20 to 95:05.

In some examples, the prime coating layer may comprise the same polymer or polymers as the barrier coating layer.

The prime coating layer may be present at a coat weight of 0.1 to 3 gsm, preferably 0.5 to 2 gsm.

A release coating layer may be applied on the prime coating layer, as described above. Compositions of release coating layers are well-known in the art. For example, the release coating layer may comprise compositions comprising polymers selected from the group consisting of hydrophilic acrylic or acrylate polymers; water-based vinyl acetate copolymer latexes.

The release coating layer may be applied to attain a coat weight of 0.1 to 5 gsm, preferably 0.5 to 4 gsm on the prime coating layer.

The overall thickness of the backing layer comprising the layers described herein ranges from 60 to 150 micrometer. For example, a backing layer of the present disclosure of 90 g/m2 has a thickness of 105 - 135 micrometer. A backing layer of 70 g/m2 has a thickness of 70 - 100 micrometer.

The backing layer of the instant disclosure presents a repulpability of more than 85% as per the Voluntary Standard described above and measured according to a test performed at the Western Michigan University for repulping and recycling. The backing layer of the instant disclosure also presents a sticky formation in paper making of lower than 5. The test methods indicate that a) cellulose fibers can be recycled in high yield to form sheet paper and b) in particular polymers used in the production of the backing layer can be easily separated from cellulose fibers, when used adhesive tapes or other products comprising the backing layer of the present disclosure are subjected to paper recycling processes. Therefore, the backing layer of the instant disclosure is highly recyclable and repulpable.

The backing layer is suitable for diverse applications like adhesive tapes, which are used for stabilizing and wrapping up carboard boxes, adhesive tapes applied on the inside of flaps of envelopes, and construction industry.

The backing layer is also suitable for print media, labels, bundling tapes, carry handle tape, printed packaging tape, promotional banderole, industrial packaging for light medium and heavy duty applications, paper-based adhesive foil.

The backing layer is in particular suitable for adhesive tapes, which are single-sided or double-sided as indicated in Figures 1 and 2.

The present disclosure also provides an adhesive tape which comprises the backing layer of the instant disclosure. The adhesive tape comprises an adhesive layer on the sole prime coating layer to afford a single-sided adhesive tape. It comprises adhesive layers on both prime coating layers to afford a double-sided adhesive tape. Adhesive layers are well-known in the art. Any adhesive layer known in the art may be used in combination with the backing layer of the present disclosure. Due to the advantageous properties of the backing layer, an adhesive tape is provided which is highly recyclable and repulpable.

The backing layer of the present disclosure is produced by successively coating the layers at coat weights described above on the paper layer. Components of layers may be applied as dispersion or as solution or as dry coating using standard methods known in the art.

The barrier coating layer may be applied via an impregnation device, such as a water bath comprising a polymer dispersion through which the paper layer is moved. The impregnated layer may then be introduced into a pair of rolls to remove excess coating layer from the paper. Subsequently it may be dried. Then the prime coating layer and the release layer (if necessary) may be applied by an air knife device.

**Examples**

Materials

Paper layer:

Unbleached, semi-extensible sack Kraft papier; grammage 60 g/m2, tensile strength: (MD) 5,3, (CD) 4,0; porosity (air resistance, Gurley) 18 s/100 ml; water absorption (Cobb60) 31 g/m2 (60s).

Barrier coating layer:

As carboxylated styrene-butadiene rubber (SBR) having a Tg of +5 degrees Celsius product "Exopal L7063", of EOC Belgium N.V. was used, providing an aqueous colloidal dispersion of a styrene-butadiene copolymer with carboxyl groups (solids content 49-51%).
As carboxylated styrene-butadiene rubber (SBR) having a Tg of -25 degrees Celsius product "Ligod I4086 Binder", of Trinseo was used, providing an aqueous colloidal dispersion of a styrene-butadiene copolymer with carboxyl groups (solids content (48-50%).
For kaolinite the product "Capim DG slurry" was used, providing a slurry having 70,5 (wt.%) solids content.

Release coating layer:

The product "Primal R-253 ER Emulsion" of Dow Chemical Company was used providing a hydrophilic acrylic emulsion of solids content of 40%. Alternatively the product "Orgal KR250" of Organikkimya was used (solids content of 40%).

Primer layer:

90% methacrylate-grafted natural rubber blended with 10% carboxylated styrene-butadiene rubber

Methods

Glass transition temperature is measured as per DIN ISO 53765 (1994-03).
Extensibility is measured according to DIN EN ISO 1924-2 (2008).
Paper porosity is measured as Air Resistance (Gurley) as per ISO 5636-5 (2003).
Paper water absorption (Cobb60) are measured according to the Cobb 60 test method ISO 535 (2014).
Repulpability and recyclability are measured according to the "Voluntary Standard For Repulping and Recycling Corrugated Fiberboard Treated to Improve Its Performance in the Presence of Water and Water Vapor" (revised Aug. 16, 2013) published by the Fibre Box Association (FBA), USA. Testing was performed at the Western Michigan University, USA, on their paper pilot plant. The test method is to evaluate the repulpability and recyclability of moisture barrier treatments or coatings applied to liners or combined corrugated board in an effort to establish a minimum threshold for moisture barrier treated or coated corrugated that is intended, and labelled, to be recyclable into new containerboard and other paper products. The test is described in the following. In this test following wordings have meanings as follows:

- Fiber-on-fiber yield is the amount of fiber that remains after the processing action, expressed as a percentage of the fiber present in the material to be tested.
- Recyclable means used paper, including in-plant and post-consumer waste paper and paperboard, which is capable of being processed into new paper or paperboard using the process defined in this standard.
- Repulpable means the test material that can undergo the operation of re-wetting and fiberizing for subsequent sheet formation, using the process defined in this standard.
- Handsheets are sheets made from a suspension of fibers in water in an operation, whereby each sheet is formed separately by draining the pulp suspension on a stationary sheet mold.

Preliminary Analysis: Before beginning the test protocol, determine the moisture content of the treated corrugated sample.

PART 1: Repulpability

A 100% charge of treated corrugated is repulped in a Modified Waring Blender and a British Disintegrator in water at a pH of 7 (±0.5 pH) that is maintained at 125°F (±10°) following the procedure outlined under Repulpability Test procedure below. The pulped material is separated in a screen with 0.010-inch or smaller slots to determine fiber recovery as a percentage of the amount of fiber charged.

Fiber yield from the repulpability test must be at least 80% based on the total weight, or 85% based on the bone dry fiber charge to the pulper.

PART 2: Recyclability

A minimum of 20% treated corrugated and the remainder of the same untreated corrugated are mixed in a laboratory-scale pulper at pH 7 (±0.5 pH) and 125°F (±10°). This is the recyclability test sample. As a control, a charge of 100% of the same untreated corrugated is also pulped using identical conditions. Each pulped material is passed through (in succession) a pressure screen equipped with a basket with 0.062 inch holes, the same screen or a similar screen equipped with a basket with 0.010 inch slots and a reverse centrifugal separator under conditions specified in the Recyclability Test procedure below.

Handsheets (3.0 gram) are made from the final stage (cleaner) accepts. For each batch tested, the handsheets are pressed and dried with heat and tested for product performance properties. Appearance tests shall be done according to the procedure outlined in Appendix B. The final sheets shall have no more than 15 spot counts, or not exceeding 30% greater counts than the control, with an area of ≥ 0.4 mm$^2$ area, averaged over 3 sheets. Detailed procedures for recyclability are given in Recyclability Test procedure below.

Repulpability test procedure

PURPOSE

To determine the repulpability of corrugated board. (Note that the Repulpability Test must be run at least twice on the treated corrugated board. The sample must pass two out of three tests.)

APPARATUS

- Specimen Cutting Device
- Balance (accurate to 0.01 gram)
- Waring Blender (with special blade, see Figure 1)
- Hot Water 125° F ± 10° F (52° C ± 5° C)
- British Disintegrator (Standard Apparatus for Pulp Evaluation No. 270)
- Open Flat Screen 10 Cut (0.010"), such as the Valley or Somerville screens
- Aluminum Weighing Pans
- Laboratory Oven at 221°F (105°C)

SPECIMEN TESTING

1. Cut corrugated board into 1 1/4 in. (31.8 mm) by 4 in. (102 mm) strips.
2. Weigh out .055 lb. (25 gm.) of corrugated board.
3. Place sample in 1500 ml. of water at 125° F ± 10° F (52° C ± 3° C).
4. Preheat blender and British disintegrator to 125° F ± 10° F.
5. Blend in a one-gallon Waring blender (equipped with special blades) on low speed (15,000 rpm) for four minutes.
6. Rinse all fibers from the blender with 500 ml. of hot water.
7. Deflake for five minutes in the British disintegrator (2000 ml. total volume) at 3000 rpm.
8. Run on .010" (.254 mm) slotted open flat screen, maintaining 1" water head, - for 20 minutes; save the accepts and rejects in aluminum weighing pans.
9. Dry in a laboratory oven for 12 hours (± 4 hours) at 221°F (105°C).
10. Weigh the pans and record the net weight of accepts, rejects, and the sum of the accepts and rejects.

CALCULATION

$$\% \text{ of Rejects} = (\text{Net rejects} \times 100) / (\text{Net accepts} + \text{Net rejects})$$

The value obtained signifies the percentage of fiber repulpability.

Recyclability test procedure

Note: Both the Control sample and the sample of Treated and Untreated test material must be tested at least twice and must pass two out of three tests.

1. Obtain a sample of the treated corrugated to be evaluated. From this sample, select a sufficient amount of material for the test. The selection should be as representative as possible of the material as a whole. Also obtain a sufficient amount of untreated corrugated to run the protocol. Selection of the charge size will depend upon the capacity of the pilot plant pulper to be used. Pulping is to be carried out at 3% consistency, or, at the consistency recommended by the pulping equipment manufacturer.

2. Determine the moisture content [TAPPI T 412]. Perform steps 3 through 9 twiceonce with the untreated "control" sample, once with the "recyclability test sample."

3. Use selected sample materials of any convenient size, but no smaller than $1 \times 1$ inch square. Bring the equipment to 125°F ($\pm$10°). Adjust the pH of the charge so that after pulping the pH will be equal to 7 ($\pm$ 0.5 pH). Raise the temperature of the pulper to 125$^0$F ($\pm$10°). Charge the pulper and pulp for 15 minutes while maintaining 125°F ($\pm$10°).

4. Repeat step 3 until sufficient material has been obtained for the following steps. Maintain the temperature of the pulp at 125°F ($\pm$10°) until it is used in step 5.

5. Combine the pulp from several batches, as necessary, and dilute to the manufacturer's recommended consistency with water heated to 125°F ($\pm$10°). Adjust the pH to 7 ($\pm$ 0.5 pH). Preheat a screen with 0.0625 inch holes to 125°F ($\pm$10°) and maintain the temperature throughout this screening step. Pass the pulp sample through the preheated screen at a volumetric reject rate of 10% of the feed rate or at appropriate volumetric reject rate based on manufacturer's specifications or recommendations.

6. With the accepts from step 5, repeat the procedure in step 5, using a screen basket with 0.010 inch slots, again maintaining the temperature, consistency and a 10% reject rate or at a rate based on manufacturer's specifications.

7. Pass the accepts from step 6 through a lightweights reverse centrifugal-type cleaner, maintaining the temperature at ($\pm$10°), consistency, and the pressure differential specified for the cleaners being used. Determine the volumetric reject rate and report.

8. From the accepts from step 7, form handsheets according to TAPPI T 205 with the following conditions:

- The slurry should be vigorously agitated (without causing a change in fiber distribution in the slurry) and maintained at ($\pm$10°) and pH 7 ($\pm$0.5 pH).

- Dry the sheets under restraint to 7% moisture content on a surface dryer maintained at 250 - 275°F.

- Recondition to TAPPI standard conditions prior to testing.

HANDSHEET PREPARATION FOR STICKIES/SPOT COUNT TEST:

1. Plug in Carver press and pre-heat top and bottom platens to 350° F.
2. Dilute test stock to approximately 1% consistency.

3. Form and dry a 500 ml check sheet.

- Couch off the excess water with two blotters, the round metal plate, and the roller.
- Dry on top of a new blotter in the speed dryer.

4. Weigh the handsheet and mark its identification and dry weight on the topside of the handsheet (not the wire side).
5. Calculate the amount of slurry to use for test sheets using the following formula:

- 2.00 grams ÷ dry sheet weight x 500 = mls of slurry to use for test sheets.

6. Form 3 handsheets for testing by using the calculated amount of slurry.
7. Place sheets on blotters and dry on the speed dryer, then mark their identification on the topside of each sheet.
8. Remove test sheets from the speed dryer (drying period is 3-5 minutes).
9. Place each test sheet between filter paper and blotters in the following configuration (bottom to top):

Blotter

Filter

Stickie Sheet

Filter

Blotter

10. Set the stacks of test sheets on top of each other and press them in the pre-heated Carver press for five minutes at 350° F and 500 psi. Watch to see that the pressure gauge maintains 500 psi.
11. Remove the test sheets from the Carver press and weigh each sheet.

- Record dry weight on each sheet

12. Count the spots in the handsheets that are $\geq$ 0.4 mm$^2$ in area using any appropriate analysis tools, such as the dirt count estimator in TAPPI T-537 or the image analysis system mentioned in TAPPI T-277 and TAPPI T-563.

This number gives the spot count, also called "sticky count" or "stickies count".

Examples

Backing layers as per the present disclosure were prepared as follows:
The barrier coating layer was applied on the paper layer via a water bath comprising a polymer dispersion through which the paper layer is moved. Temperatures of the water bath are generally ambient temperatures (15 to 40 degrees Celsius). The impregnated layer may then be introduced into a pair of rolls to remove excess coating layer from the paper. Subsequently it may be dried at 50 to 220 degrees Celsius. Then the prime coating layer and the release layer (if necessary) may be applied by an air knife device at ambient temperatures.

Example 1

The unbleached semi-extensible sack Kraft paper having a basis weight of 60 gsm as described above was used as paper layer.
The paper layer was coated on both sides with a composition comprising 50% carboxylated styrene-butadiene rubber (SBR) having a Tg of -25 degrees Celsius and 50% kaolinite to provide the barrier coating layer. The coat weight was 5 gsm. In this example a soft SBR was used.
One side of the obtained layer stack was coated with a hydrophilic acrylic dispersion (Primal R253 / Orgal KR250) at a coat weight of 2 gsm to provide a release coating layer.
When subjecting the obtained backing layer to the Western Michigan University test method for repulping and recycling, a yield of fiber recyclability of 92.5% and 94.1% (two test runs) was obtained. As the values are above 85%, the sample passed the test method. Regarding the stickies test, 1 sticky per hand sheet was observed. As this is below the target of 5 stickies, the sample passed the test method.

Example 2

The unbleached semi-extensible sack Kraft paper having a basis weight of 60 gsm was used as paper layer.

The paper layer was coated on both sides with a composition comprising 50% carboxylated styrene-butadiene rubber (SBR) having a Tg of +5 degrees Celsius and 50% kaolinite to provide the barrier coating layer. The coat weight was 5 gsm. In this example a hard SBR was used.

One side of the obtained layer stack was coated with a hydrophilic acrylic dispersion (Primal R253 / Orgal KR250) at a coat weight of 2 gsm to provide a release coating layer.

When subjecting the obtained backing layer to the Western Michigan University test method for repulping and recycling, a yield of fiber recyclability of 95.8% and 97.5% (two test runs) was obtained. As the values are above 85%, the sample passed the test method. Regarding the stickies test, 1.67 stickies per hand sheet were observed. As this is below the target of 5 stickies, the sample passed the test method.

Comparative Example

The unbleached semi-extensible sack Kraft paper having a basis weight of 60 gsm was used as paper layer.

The paper layer was coated on both sides with a composition comprising 50% carboxylated styrene-butadiene rubber (SBR) having a Tg of -25 degrees to provide a barrier coating layer. The coat weight was 5 gsm.

One side of the obtained layer stack was coated with a hydrophilic acrylic dispersion (Primal R253 / Orgal KR250) at a coat weight of 2 gsm to provide a release coating layer.

The other side of the layer stack was coated with a dispersion comprising 90% methacrylate-grafted natural rubber and 10% carboxylated styrene-butadiene rubber at a coat weight of 1 gsm to provide a primer layer.

When subjecting the obtained backing layer to the Western Michigan University test method for repulping and recycling, a yield of fiber recyclability of 65.9% and 69.2% (two test runs) was obtained. As the values are below 85%, the sample failed the test method.

Regarding the stickies test, more than 100 stickies per hand sheet were observed. As this is above the target of 5 stickies, the sample failed the test method.

Embodiment Section

1. A backing layer comprising

- a first layer, which is a paper layer,
- a second layer, which is a barrier coating layer, applied on one or both sides of the first layer,

characterized in that the barrier coating layer comprises

- 30 to 70 % by weight of an inorganic filler,
- 70 to 30 % by weight of a polymer having a glass transition temperature (Tg) of -35 to +15 °C.

2. The backing layer according to claim 1, comprising a prime coating layer applied on the second layer, which is a barrier coating layer, wherein the prime coating layer is present only on one side of the backing layer.

3. The backing layer according to claim 1, comprising a prime coating layer applied on the second layer, which is a barrier coating layer, wherein the prime coating layer is present on both sides of the backing layer.

4. The backing layer according to claim 2, comprising a release coating layer applied on the second layer, which is a barrier coating layer, wherein the release coating layer is present only on one side of the backing layer.

5. The backing layer according to any of claims 1 to 4, characterized in that the barrier coating layer comprises 35 to 65 wt.%, preferably 40 to 60 wt.%, more preferably 45 to 55 wt.% of inorganic filler.

6. The backing layer according to any of claims 1 to 5, characterized in that the barrier coating layer comprises 65 to 35 wt.%, preferably 60 to 40 wt.%, more preferably 55 to 45 wt.% of a polymer having a glass transition temperature (Tg) of -35 to +15 °C.

7. The backing layer according to any of claims 1 to 6, characterized in that the polymer has a glass transition temperature (Tg) of -30 to +10 °C, preferably -25 to +5 °C.

8. The backing layer according to any of claims 1 to 7, characterized in that the barrier coating layer comprises 0 to 0.05 wt.% of an anti-foaming agent.

9. The backing layer according to claim 8, characterized in that the barrier coating layer comprises 0.01 to 0.03 wt.% of an anti-foaming agent.

10. The backing layer according to claims 8 or 9, characterized in that the anti-foaming agent is selected from the group consisting of a mineral oil-based, vegetable oil-based, and siloxane-oil based anti-foaming agent.

11. The backing layer according to any of claims 1 to 10, characterized in that the first layer, which is a paper layer, has an extensibility in machine direction (MD) of 3 to 10 %, preferably 5 to 8 %, wherein extensibility has been measured as per DIN EN ISO 1924-2.

12. The backing layer according to any of claims 1 to 11, characterized in that the first layer, which is a paper layer, has an extensibility in cross direction (CD), which is orthogonal to machine direction (MD) of 5 to 15 %, preferably 8 to 12 %.

13. The backing layer according to any of claims 1 to 12, characterized in that the first layer, which is a paper layer, has a porosity measured as Air Resistance (Gurley) of 5 to 25, preferably 10 to 20 Gurleys, measured as per ISO 5636-5.

14. The backing layer according to any of claims 1 to 13, characterized in that the first layer, which is a paper layer, has water absorption (Cobb60) values of 20 to 40 gsm, preferably 25 to 35 gsm measured according to the Cobb 60 test method ISO 535.

15. The backing layer according to any of claims 1 to 14, characterized in that the first layer, which is a paper layer, comprises paper selected from the group consisting of bleached or brown Kraft paper, bleached or brown sack Kraft paper, semi-extensible Kraft paper, semi-extensible sack Kraft paper, preferably semi-extensible sack Kraft paper.

16. The backing layer according to any of claims 1 to 15, characterized in that the first layer, which is a paper layer, comprises paper having a basis weight of 40 to 80 gsm, preferably 50 to 70 gsm.

17. The backing layer according to any of claims 1 to 16, characterized in that the second layer, which is a barrier coating layer, comprises an inorganic filler selected from the group consisting of kaolinite, calcined kaolinite, calcium carbonate, precipitated calcium carbonate (PCC), ground calcium carbonate (GCC), talc, mica, clay, silica, precipitated silica, pyrogenic silica, titanium dioxide or their mixtures.

18. The backing layer according to any of claims 1 to 16, characterized in that the second layer, which is a barrier coating layer, comprises kaolinite.

19. The backing layer according to any of claims 1 to 18, characterized in that the second layer, which is a barrier coating layer, comprises a polymer selected from the group consisting of carboxylated styrene-butadiene rubber, styrene butadiene-rubber, acrylate-based polymers, acrylo-nitrile butadiene rubber, natural rubber, polyvinylacetate or mixtures thereof, with carboxylated styrene-butadiene rubber being preferred.

20. The backing layer according to any of claims 1 to 18, characterized in that the second layer, which is a barrier coating layer, comprises carboxylated styrene-butadiene rubber having a Tg of -27 to -23 °C.

21. The backing layer according to any of claims 1 to 18, characterized in that the second layer, which is a barrier coating layer, comprises carboxylated styrene-butadiene rubber having a Tg of +3 to +7 °C.

22. The backing layer according to any of claims 1 to 21, characterized in that the second layer, which is a barrier coating layer, is present at a coat weight of 1 to 10 gsm, preferably 3 to 7 gsm.

23. The backing layer according to any of claims 2 to 22, characterized in that the prime coating layer comprises polymers or polymer compositions selected from the group consisting of styrene butadiene-rubber, acrylate-based polymers, acrylo-nitrile butadiene rubber, polyvinylacetate, natural rubber, pre-vulcanised natural rubber, butyl-acrylate; natural rubber grafted with methacrylate, carboxylated styrene butadiene rubber, and polyurethane.

24. The backing layer according to claim 23, characterized in that the prime coating layer comprises a composition of natural rubber grafted with methacrylate and carboxylated styrene butadiene rubber at a proportion of 80: 20 to 95:05.

25. The backing layer according to any of claims 2 to 14, characterized in that the prime coating layer is present at a coat weight of 0.1 to 3 gsm, preferably 0.5 to 2 gsm.

26. The backing layer according to any of claims 4 to 25, characterized in that the release coating layer comprises compositions comprising polymers selected from the group consisting of hydrophilic acrylic or acrylate polymers; water-based vinyl acetate copolymer latexes.

27. The backing layer according to any of claims 4 to 26, characterized in that the release coating layer is present at a coat weight of 0.1 to 5 gsm, preferably 0.5 to 4 gsm.

28. The backing layer according to any of claims 1 to 27, characterized in that it has a repulpability of more than 85% measured according to the Western Michigan University test method for repulping and recycling.

29. The backing layer according to any of claims 1 to 28, characterized in that it has a sticky formation in paper making of lower than 5.

30. The backing layer according to any of claims 1 to 29, characterized in that it is suitable for adhesive tapes.

31. An adhesive tape comprising the backing layer according to any of claims 1 to 30.

**Claims**

1.  A backing layer comprising

    - a first layer, which is a paper layer,
    - a second layer, which is a barrier coating layer, applied on one or both sides of the first layer,

    **characterized in that** the barrier coating layer comprises

    - 30 to 70 % by weight of an inorganic filler,
    - 70 to 30 % by weight of a polymer having a glass transition temperature (Tg) of -35 to +15 °C.

2.  The backing layer according to claim 1, comprising a prime coating layer applied on the second layer, which is a barrier coating layer, wherein the prime coating layer is present only on one side of the backing layer.

3.  The backing layer according to claim 1, comprising a prime coating layer applied on the second layer, which is a barrier coating layer, wherein the prime coating layer is present on both sides of the backing layer.

4.  The backing layer according to claim 2, comprising a release coating layer applied on the second layer, which is a barrier coating layer, wherein the release coating layer is present only on one side of the backing layer.

5.  The backing layer according to any of claims 1 to 4, **characterized in that** the barrier coating layer comprises 35 to 65 wt.%, preferably 40 to 60 wt.%, more preferably 45 to 55 wt.% of inorganic filler.

6.  The backing layer according to any of claims 1 to 5, **characterized in that** the barrier coating layer comprises 65 to 35 wt.%, preferably 60 to 40 wt.%, more preferably 55 to 45 wt.% of a polymer having a glass transition temperature (Tg) of -35 to +15 °C.

7.  The backing layer according to any of claims 1 to 6, **characterized in that** the first layer, which is a paper layer, has an extensibility in machine direction (MD) of 3 to 10 %, preferably 5 to 8 %, wherein extensibility has been measured as per DIN EN ISO 1924-2.

8. The backing layer according to any of claims 1 to 7, **characterized in that** the first layer, which is a paper layer, has an extensibility in cross direction (CD), which is orthogonal to machine direction (MD) of 5 to 15 %, preferably 8 to 12 %.

9. The backing layer according to any of claims 1 to 8, **characterized in that** the first layer, which is a paper layer, comprises paper having a basis weight of 40 to 80 gsm, preferably 50 to 70 gsm.

10. The backing layer according to any of claims 1 to 9, **characterized in that** the second layer, which is a barrier coating layer, comprises an inorganic filler selected from the group consisting of kaolinite, calcined kaolinite, calcium carbonate, precipitated calcium carbonate (PCC), ground calcium carbonate (GCC), talc, mica, clay, silica, precipitated silica, pyrogenic silica, titanium dioxide or their mixtures.

11. The backing layer according to any of claims 1 to 10, **characterized in that** the second layer, which is a barrier coating layer, is present at a coat weight of 1 to 10 gsm, preferably 3 to 7 gsm.

12. The backing layer according to any of claims 1 to 11, **characterized in that** it has a repulpability of more than 85% measured according to the Western Michigan University test method for repulping and recycling.

13. The backing layer according to any of claims 1 to 12, **characterized in that** it has a sticky formation in paper making of lower than 15. (further claims for 1. lower than 10 and 2. Lower than 5)

14. The backing layer according to claim 13, **characterized in that** it has a sticky formation in paper making of lower than 10.

15. The backing layer according to claim 13, **characterized in that** it has a sticky formation in paper making of lower than 5.

16. The backing layer according to any of claims 1 to 15, **characterized in that** it is suitable for adhesive tapes.

17. An adhesive tape comprising the backing layer according to any of claims 1 to 16.

## Figure 1

## Figure 2

Europäisches
Patentamt

European
Patent Office

Office européen
des brevets

# EUROPEAN SEARCH REPORT

**Application Number**

EP 22 21 6244

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2016 223036 A (JUJO PAPER CO LTD) 28 December 2016 (2016-12-28) * claims 1-11 * * paragraphs [0001], [0002] * * paragraph [0013] – paragraph [0021] * * paragraph [0038] – paragraph [0039] * ----- | 1-17 | INV. D21H19/40 B65D63/10 D21H19/44 D21H19/82 D21H19/84 D21H27/00 |
| X | US 5 851 662 A (SUZUKI KENJI [JP] ET AL) 22 December 1998 (1998-12-22) * column 11, line 28 – column 12, line 15 * * claims 1-23 * ----- | 1,17 | |
| X | WO 2018/156685 A1 (WESTROCK MWV LLC [US]) 30 August 2018 (2018-08-30) * figures 1A, 2; table 2 * * paragraph [0013] – paragraph [0020] * ----- | 1 | |
| A | US 5 496 601 A (SCHURB FRANCIS A [US]) 5 March 1996 (1996-03-05) * column 1, line 13 – line 44 * * column 4, line 4 – line 14 * * column 4, line 65 – column 5, line 2 * ----- | 1-17 | TECHNICAL FIELDS SEARCHED (IPC) D21H B65D |
| A | US 5 624 751 A (SPIES MANFRED [DE] ET AL) 29 April 1997 (1997-04-29) * column 1, line 50 – line 67 * ----- | 1-17 | |
| A | JP 2004 308097 A (JUJO PAPER CO LTD) 4 November 2004 (2004-11-04) * paragraph [0021] – paragraph [0034] * ----- | 1-17 | |

The present search report has been drawn up for all claims

| Place of search | Date of completion of the search | Examiner |
|---|---|---|
| Munich | 30 May 2023 | Billet, Aina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...............................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 6244

This annex lists the patent family members relating to the patent documents cited in the above-mentioned European search report.
The members are as contained in the European Patent Office EDP file on
The European Patent Office is in no way liable for these particulars which are merely given for the purpose of information.

30-05-2023

| Patent document cited in search report | | Publication date | Patent family member(s) | | Publication date |
|---|---|---|---|---|---|
| JP 2016223036 | A | 28-12-2016 | JP | 6649702 B2 | 19-02-2020 |
| | | | JP | 2016223036 A | 28-12-2016 |
| US 5851662 | A | 22-12-1998 | AU | 688646 B2 | 12-03-1998 |
| | | | EP | 0745653 A1 | 04-12-1996 |
| | | | JP | 3344613 B2 | 11-11-2002 |
| | | | JP | H08218040 A | 27-08-1996 |
| | | | US | 5851662 A | 22-12-1998 |
| | | | WO | 9618703 A1 | 20-06-1996 |
| WO 2018156685 | A1 | 30-08-2018 | BR | 112019015529 A2 | 17-03-2020 |
| | | | CA | 3051458 A1 | 30-08-2018 |
| | | | CN | 110312833 A | 08-10-2019 |
| | | | EP | 3585942 A1 | 01-01-2020 |
| | | | JP | 2020508403 A | 19-03-2020 |
| | | | US | 2018245291 A1 | 30-08-2018 |
| | | | US | 2022154410 A1 | 19-05-2022 |
| | | | US | 2023080338 A1 | 16-03-2023 |
| | | | WO | 2018156685 A1 | 30-08-2018 |
| US 5496601 | A | 05-03-1996 | AU | 1600595 A | 29-08-1995 |
| | | | BR | 9506774 A | 14-10-1997 |
| | | | CA | 2182497 A1 | 17-08-1995 |
| | | | CN | 1140463 A | 15-01-1997 |
| | | | EP | 0745110 A1 | 04-12-1996 |
| | | | JP | H09508933 A | 09-09-1997 |
| | | | KR | 970701245 A | 17-03-1997 |
| | | | US | 5496601 A | 05-03-1996 |
| | | | WO | 9521899 A1 | 17-08-1995 |
| US 5624751 | A | 29-04-1997 | DE | 4330362 A1 | 09-03-1995 |
| | | | EP | 0641847 A2 | 08-03-1995 |
| | | | JP | 3535580 B2 | 07-06-2004 |
| | | | JP | H07102222 A | 18-04-1995 |
| | | | US | 5624751 A | 29-04-1997 |
| JP 2004308097 | A | 04-11-2004 | JP | 4371873 B2 | 25-11-2009 |
| | | | JP | 2004308097 A | 04-11-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Voluntary Standard For Repulping and Recycling Corrugated Fiberboard Treated to Improve Its Performance in the Presence of Water and Water Vapor. Fibre Box Association (FBA), 16 August 2013